# FASCICULE DE BREVET EUROPEEN

(11) **EP 0 744 604 B1**
(45) Date de publication et mention de la délivrance du brevet: **30.01.2002**
(21) Numéro de dépôt: 96401094.6
(22) Date de dépôt: 20.05.1996
(51) Int. Cl.: G01M 3/20

(54) **Installation pour détecter la présence d'helium dans un circuit de fluide**
Installation zum Nachweis von Helium in einem Flüssigkeitskreislauf
Installation for the detection of helium in a fluid circuit

(30) Priorité: 24.05.1995 FR 9506220
(43) Date de publication de la demande: 27.11.1996
(73) Titulaire: ALCATEL, 75008 Paris (FR)
(72) Inventeur: Gevaud, Roland, 74370 Argonay (FR)
(74) Mandataire: Gosse, Michel

(56) Documents cités:
- EP-A- 0 365 042
- EP-A- 0 534 825
- US-A- 4 459 844

## Description

La présente invention concerne une installation pour détecter la présence d'hélium dans un circuit de fluide.

Pour contrôler l'étanchéité de circuits dans des installations telles que chimiques, pétrochimiques, thermiques, etc..., en fonctionnement, il est connu d'injecter de l'hélium sous pression dans ces circuits et d'entourer les parties que l'on souhaite contrôler d'une enveloppe faisant partie d'un circuit secondaire véhiculant un fluide secondaire. En cas de fuite du circuit de l'installation dans les parties contrôlées, le fluide secondaire est "pollué" par de l'hélium. La présence d'hélium dans ce circuit secondaire révèle ainsi l'existence d'une fuite.

Pour détecter cette présence d'hélium, une technique connue consiste à utiliser une cellule de prélèvement à membrane semi-perméable qui consiste essentiellement en un petit boîtier séparé intérieurement en deux parties par une membrane séparatrice semi-perméable, ne laissant passer que l'hélium, et s'appuyant sur un support poreux. Cette cellule est insérée dans un circuit de prélèvement du fluide secondaire, celui-ci passant devant la membrane semi-perméable, tandis que la partie du boîtier située de l'autre côté de la membrane est reliée à un détecteur de fuite à hélium.

Une autre solution connue, et qui revient au même, est d'utiliser une sonde de reniflage à membrane semi-perméable reliée à un détecteur de fuite. La seule différence est qu'ici la sonde ne constitue pas un boîtier en deux parties séparées intérieurement par la membrane, mais un boîtier où la membrane ferme en quelque sorte le boîtier et que pour faire passer le fluide dans lequel on veut détecter l'éventuelle présence d'hélium, devant la membrane, il faut introduire la sonde dans le circuit traversé par ce fluide en prévoyant un joint d'étanchéité autour de la sonde.

Ainsi le document EP-0 534 825 décrit un détecteur de fuite à groupe de pompage primaire de type sec à au moins deux étages et comportant une sonde de reniflage reliée au côté haute pression d'un organe de prélèvement dont le côté basse pression est relié en un point du groupe de pompage secondaire où le régime d'écoulement est moléculaire, le côté haute pression de l'organe de prélèvement étant en outre relié en un point situé entre deux étages du groupe de pompage sec primaire. Ainsi il est connu de dudit document EP-0 534 825 une installation pour détecter la présence d'hélium dans un circuit de fluide, comprenant un organe de prélèvement constituant une capacité comprenant un premier espace et un deuxième espace internes séparés l'un de l'autre par un cloisonnement semi-perméable pour laisser passer l'hélium, ledit premier espace dudit organe de prélèvement pouvant être inséré en série dans ledit circuit de fluide.

Dans un cas comme dans l'autre des solutions connues, la canalisation reliant le détecteur de fuite à la cellule de prélèvement ou à la sonde de reniflage est sous vide poussé et l'hélium éventuellement présent circule en régime moléculaire. Pour obtenir une réponse rapide du détecteur, il est donc indispensable que cette canalisation de liaison soit courte, au grand maximum 2 à 3 mètres et d'assez gros diamètre : au moins 1 cm. Ainsi le détecteur doit-il être proche du circuit à contrôler mais celui-ci est parfois, et même souvent, dans un environnement peu accessible, encombré de tuyauterie, ou même dangereux.

La présente invention a pour but de pallier cet inconvénient et a pour objet une installation pour détecter la présence d'hélium dans un circuit de fluide, comprenant un organe de prélèvement constituant une capacité comprenant un premier espace et un deuxième espace internes séparés l'un de l'autre par un cloisonnement semi-perméable pour laisser passer l'hélium, ledit premier, espace dudit organe de prélèvement pouvant être inséré en série dans ledit circuit de fluide, caractérisée en ce que ledit deuxième espace étant relié d'une part à une source de gaz porteur par l'intermediaire d'un orifice à ouverture réglable et d'autre part, par une canalisation, à un moyen de pompage, pour convoyer le flux pompé dans ladite canalisation en régime visqueux vers un organe d'admission relié à un détecteur de fuite à hélium.

Selon une réalisation particulière, ledit moyen de pompage est un étage de pompe primaire faisant partie dudit détecteur de fuite et ledit organe d'admission est une capsule à paroi poreuse semi-perméable reliée d'une part à ladite canalisation, et audit moyen de pompage, et d'autre part à une entrée dudit détecteur de fuite à hélium.

L'invention va maintenant être décrite en se reportant au dessin annexé dans lequel :
La figure 1 est un schéma représentant une installation selon l'invention pour détecter la présence d'hélium dans un circuit de fluide.
La figure 2 montre le détail d'une partie de la figure 1 dans une réalisation particulière.
La figure 3 montre un organe de prélèvement conforme à l'invention, dans une réalisation particulière.
La figure 4 montre une installation selon l'invention montrant le cas d'une association en série de plusieurs organes de prélèvement permettant le contrôle de plusieurs circuits de fluide.
La figure 5 est une variante de l'installation de la figure 4, dans laquelle les différents organes de prélèvement sont disposés en parallèle.

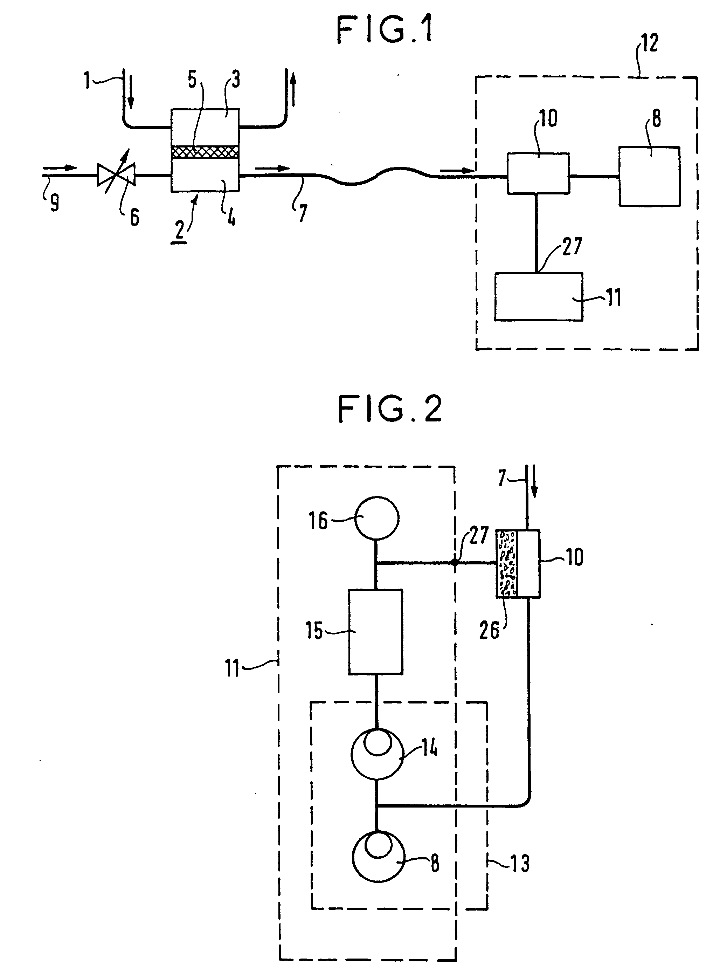

En se référant à la figure 1, on voit ainsi une installation selon l'invention pour détecter la présence d'hélium dans un circuit 1 de fluide. Pour ce faire, on utilise un organe de prélèvement 2. Un tel organe est connu en soi. Il constitue par exemple une capacité comprenant un premier espace 3 et un deuxième espace 4 séparés l'un de l'autre par un cloisonnement 5 semi-perméable ne laissant passer que l'hélium. Ce cloisonnement est composé, par exemple, d'une fine membrane séparatrice, d'une dizaine de microns d'épaisseur, ne laissant passer que l'hélium dissous dans le liquide et d'un support poreux supportant la membrane.

Le premier espace 3 de cet organe de prélèvement 2 est inséré en série dans le circuit 1. Le deuxième espace 4 de l'organe de prélèvement 2 est relié d'une part, par l'intermédiaire d'une vanne à ouverture réglable 6 à une source d'un gaz porteur qui peut être tout simplement de l'air ou de préférence un gaz ne contenant pas d'hélium tel que de l'azote ou du dioxyde de carbone, et d'autre part, par une canalisation 7 à un moyen de pompage 8. Cette canalisation 7 peut être longue de quelques mètres à quelques dizaines de mètres et avoir un diamètre interne petit, de l'ordre du millimètre. Le flux pompé, aspiré en 9, est convoyé en régime visqueux. En extrémité de la conduite 7, le flux pompé passe sur un organe d'admission 10 relié à un détecteur de fuite à hélium 11.

L'organe d'admission 10 est par exemple (figure 2) une capsule à paroi poreuse semi-perméable 26 semblable à l'organe de prélèvement 2 ou bien même une simple sonde de reniflage introduite dans une partie élargie de la canalisation 7. Cet organe d'admission est relié d'une part à la canalisation 7 et à la pompe 8, et d'autre part à une entrée 27 du détecteur 11.

Ainsi dans l'éventualité de la présence d'hélium dans le circuit fluide 1, l'hélium seul passe au travers du cloisonnement semi-perméable 5 et il se retrouve dans le deuxième espace 4 entraîné et mélangé au gaz porteur (air, azote, etc...) aspiré en 9 par la pompe 8 et entraîné par celle-ci en régime visqueux. Le flux du gaz porteur est ajusté par la vanne réglable 6. Au niveau de l'organe d'admission 10, le flux gazeux se divise en deux, une petite partie se dirige vers le détecteur 11 et la plus grande partie est pompée par la pompe 8. Avantageusement, on utilise comme gaz porteur aspiré en 9, non de l'air contenant naturellement de l'hélium, mais plutôt de l'azote, ce qui permet de diminuer le bruit de fond.

Avantageusement, la pompe 8 fait partie du système de pompage du détecteur lui-même comme le montre la figure 2 qui donne une réalisation préférée de l'ensemble des éléments regroupés dans le cadre 12 de la figure 1.

On retrouve la canalisation 7 conduisant à l'organe d'admission 10. Là, la majeure partie du flux gazeux est pompée à grande vitesse par l'étage haute pression 8 du groupe de pompage primaire 13 comportant deux pompes primaires à palettes 14 et 8 reliées en série.

Une petite partie du flux entrant dans 10 est aspirée par le groupe de pompage du détecteur comprenant une pompe secondaire 15 et le groupe de pompage primaire 13. Une cellule d'analyse 16 est reliée à l'aspiration de la pompe secondaire 15.

Ainsi, grâce à l'invention, l'ensemble 12 peut être situé loin du circuit 1 à contrôler et l'hélium éventuellement présent dans le circuit et traversant la cloison 5 est entraîné par le flux gazeux porteur aspiré en 9 et rapidement acheminé en régime visqueux jusqu'à l'organe d'admission 10 du détecteur. La canalisation 7 peut être très longue comme il a été dit plus haut.

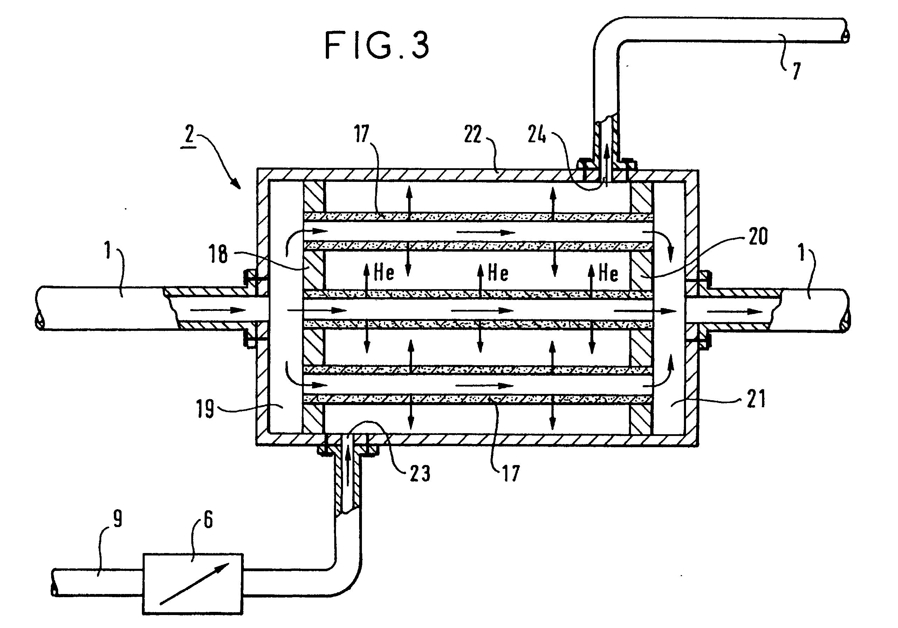

La figure 3 montre une variante de réalisation de l'organe de prélèvement 2 augmentant la surface des membranes séparatrices et donc permettant à une plus grande quantité d'hélium de traverser ces membranes et ainsi d'augmenter le flux d'hélium entraîné par le gaz porteur, ce qui accroît la sensibilité.

Il comprend une pluralité de tubes poreux 17 servant chacun de support à une membrane semi-perméable. Ces tubes sont disposés parallèlement et sont reliés à une extrémité à une première plaque tubulaire 18 associée à un collecteur d'entrée 19 et l'autre extrémité des tubes 17 sont de la même façon reliés à une seconde plaque tubulaire 20 associée à un collecteur de sortie 21. Une enveloppe externe 22 enferme les tubes 17 en reliant les deux plaques tubulaires 18 et 20. Cette enveloppe 22 comprend un orifice d'entrée 23 destinée à être reliée à une source de gaz porteur et un orifice de sortie 24 relié à la canalisation 7.

Les collecteurs d'entrée et de sortie 19 et 21 sont reliés au circuit fluide 1 à contrôler.

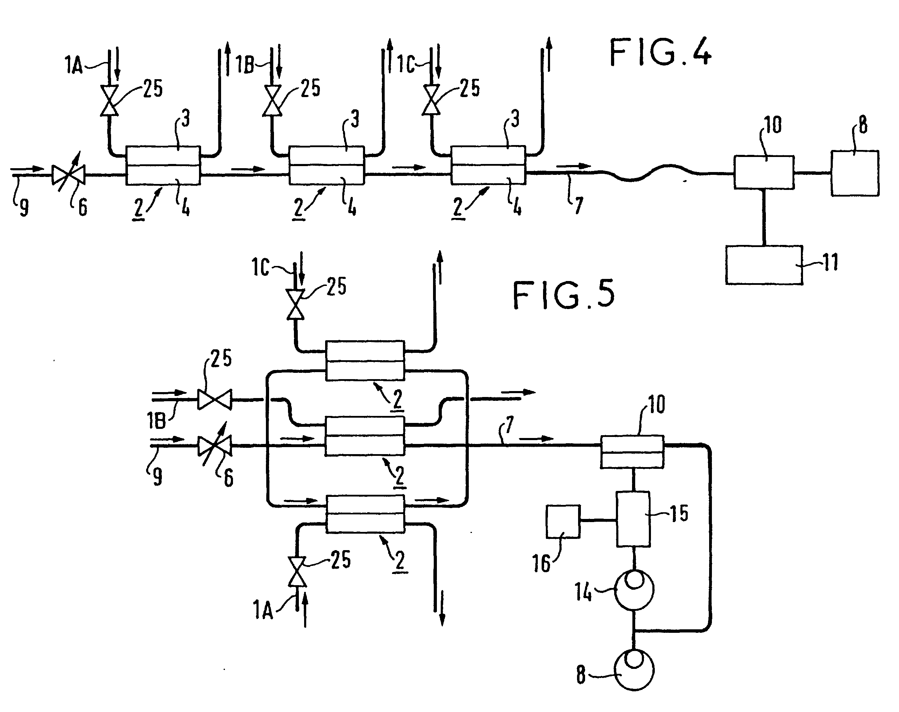

La figure 4 montre le cas d'une installation où plusieurs organes de prélèvement 2 sont associés en série permettant le contrôle de plusieurs circuits de fluide 1A, 1B, 1C distincts. Chacun de ces circuits est équipé d'une vanne 25 permettant de faire la mesure successivement.

La figure 5 est une variante de la figure 4 dans laquelle les organes de prélèvement 2 sont associés en parallèle. Dans cette dernière figure, les organes de détection ont été détaillés comme sur la figure 2.

## Revendications

1. Installation pour détecter la présence d'hélium dans un circuit (1) de fluide, comprenant un organe de prélèvement (2) constituant une capacité comprenant un premier espace (3) et un deuxième espace (4) internes séparés l'un de l'autre par un cloisonnement (5) semi-perméable pour laisser passer l'hélium, ledit premier espace (3) dudit organe de prélèvement (2) pouvant être inséré en série dans ledit circuit de fluide (1),
**caractérisée en ce que** ledit deuxième espace (4) étant relié d'une part à une source (9) de gaz porteur par l'intermédiaire d'un orifice à ouverture réglable (6), et d'autre part, par une canalisation (7), à un organe de pompage (8), pour convoyer le flux pompé dans ladite canalisation (7) en régime visqueux vers un organe d'admission (10) relié à un détecteur de fuite à hélium (11).

2. Installation selon la revendication 1, **caractérisée en ce que** ledit moyen de pompage (8) est un étage (8) de pompe primaire (13) faisant partie dudit détecteur de fuite à hélium (11).

3. Installation selon l'une des revendications 1 ou 2, **caractérisée en ce que** ledit organe d'admission (10) est une capsule à paroi poreuse semi-perméable (26) reliée d'une part à ladite canalisation (7) et audit moyen de pompage (8), et d'autre part à une entrée (27) dudit détecteur de fuite à hélium (11).

4. Installation selon l'une des revendications 1 à 3, **caractérisée en ce que** ledit organe de prélèvement (2) comprend une pluralité de tubes poreux (17) servant chacun de support à une membrane semi-perméable, disposés parallèlement et reliés à une extrémité à une première plaque tubulaire (18) associée à un collecteur d'entrée (19) et à l'autre extrémité à une seconde plaque tubulaire (20) associée à un collecteur de sortie (21), une enveloppe externe (22) reliant les deux plaques tubulaires et enfermant les tubes et comprenant un orifice d'entrée (23) et un orifice de sortie (24).

5. Installation selon l'une des revendications précédentes, **caractérisée en ce que** lesdits deuxièmes espaces (4) de n organes de prélèvement (2) sont associés en série ou en parallèle et **en ce que** ledit premier espace (3) de chacun desdits n organes de prélèvement est inséré dans un circuit de fluide (1A, 1B, 1C) particulier à contrôler.

## Claims

1. An installation for detecting the presence of helium in a fluid circuit (1), said installation including a tapping member (2) constituting a volume comprising a first internal space (3) and a second internal space (4) separated from each other by a semi-permeable partition (5) through which helium can pass, said first space (3) of said tapping member (2) being suitable for being inserted in series in said fluid circuit (1),
said installation being **characterized in that** said second space (4) is connected both to a gas carrier source (9) via an orifice (6) having an adjustable aperture, and also to a pumping member (8) via a pipe (7), in order to convey the flow pumped through said pipe (7) under viscous conditions towards a feed member (10) connected to a helium leak detector (11).

2. An installation according to claim 1, **characterized in that** said pumping member (8) is a stage (8) of a primary pump (13) that is part of said helium leak detector (11).

3. An installation according to claim 1 or 2, **characterized in that** said feed member (10) is a capsule having a semi-permeable porous wall (26), which capsule is connected firstly to said pipe (7) and to said pumping member (8), and secondly to an inlet (27) of said helium leak detector (11).

4. An installation according to any one of claims 1 to 3, **characterized in that** said tapping member (2) comprises a plurality of porous tubes (17), each of which serves to support a semi-permeable membrane, the tubes being disposed parallel to one another and being connected at one end to a first tube plate (18) associated with an inlet manifold (19) and at the other end to a second tube plate (20) associated with an outlet manifold (21), an outer casing (22) interconnecting the two tube plates, enclosing the tubes, and being provided with an inlet orifice (23) and an outlet orifice (24).

5. An installation according to any preceding claim, **characterized in that** said second spaces (4) of n tapping members (2) are associated together in series or in parallel, and **in that** said first space (3) of each of said n tapping members is inserted in a specific fluid circuit (1A, 1B, 1C) to be tested.

## Patentansprüche

1. Installation zum Nachweis von Helium in einem Flüssigkeitskreislauf (1) mit einem Entnahmeorgan (2), das eine Kapazität mit einem ersten inneren Raum (3) und einem zweiten inneren Raum (4) bildet, die voneinander durch eine semi-permeable Unterteilung (5) zum Durchlassen von Helium getrennt sind, wobei der erste Raum (3) des Entnahmeorgans (2) in Reihe in den Flüssigkeitskreislauf (1) eingefügt werden kann,**dadurch gekennzeichnet, dass** der zweite Raum (4) einerseits über einen Einlass mit regelbarer Öffnung (6) mit einer Trägergasquelle (9) und andererseits über eine Leitung (7) mit einem Pumporgan(8) verbunden ist, um den in der Leitung (7) gepumpten Strom im viskösen Bereich zu einem mit einem Heliumleckdetektor (11) verbundenen Einlassorgan (10) zu befördern.

2. Installation nach Anspruch 1, **dadurch gekennzeichnet, dass** das Pumpmittel (8) eine einen Teil des Heliumleckdetektors (11) bildende primäre Pumpstufe (13) ist.

3. Installation nach einem der Ansprüche 1 oder 2, **dadurch gekennzeichnet, dass** das Einlassmittel (10) eine Kapsel mit einer semi-permeablen, porösen Wand (26) ist, die einerseits mit der Leitung (7) und dem Pumpmittel (8), und andererseits mit einem Einlaß (27) des Heliumlecknachweisdetektors (11) verbunden ist.

4. Installation nach einem der Ansprüche 1 bis 3, **dadurch gekennzeichnet, daß** das Entnahmeorgan (2) eine Vielzahl von, jeweils als Stütze für eine semi-permeable Membran dienenden, porösen Rohren (7), die parallel angeordnet sind und an einen Ende mit einer mit einem Eingangssammler (19) verbundenen ersten röhrenförmigen Platte (18) und am anderen Ende mit einem mit einem Ausgangssammler (21) verbundenen zweiten röhrenförmigen Platte (20) verbunden sind und eine die beiden röhrenförmigen Platten verbindende, die Rohre verschließende und eine Einlassöffnung (23) und eine Auslassöffnung (24) aufweisende äußere Umhüllung (22) umfasst.

5. Installation nach einem der vorhergehenden Ansprüche, **dadurch gekennzeichnet, dass** die beiden Räume (4) der n Entnahmeorgane (2) in Reihe oder parallel verbunden sind, und dass der erste Raum (3) von jedem der n Entnahmeorgane in einen eigenen zu kontrollierenden Flüssigkeitskreislauf (1A, 1B, 1C) eingefügt wird.
